# FASCICULE DE BREVET EUROPEEN

(11) **EP 1 265 500 B1**
(45) Date de publication et mention de la délivrance du brevet: **13.01.2010**
(21) Numéro de dépôt: 01919531.2
(22) Date de dépôt: 20.03.2001
(51) Int. Cl.: A23L 3/02, A23L 3/04, A23L 3/00, B65G 54/02

(54) **INSTALLATION DE STERILISATION EN CONTINU DE PRODUITS CONTENUS DANS DES EMBALLAGES SOUPLES**
EINRICHTUNG ZUR KONTINUIERLICHEN STERILISATION VON PRODUKTEN IN WEICHVERPACKUNGEN
INSTALLATION FOR CONTINUOUS STERILISATION OF PRODUCTS CONTAINED IN FLEXIBLE PACKAGES

(30) Priorité: 20.03.2000 FR 0003500
(43) Date de publication de la demande: 18.12.2002
(73) Titulaire: Steriflow, 42300 Roanne (FR)
(72) Inventeur: ROUMAGNAC, Jean-Patrick, F-42120 Le Coteau (FR)
(74) Mandataire: Cardy, Sophie Marie
(86) Numéro de dépôt international: PCT/FR2001/000824
(87) Numéro de publication internationale: WO 2001/070050

(56) Documents cités:
- EP-A- 0 267 416
- EP-A- 0 347 623
- EP-A- 0 738 476
- EP-A- 0 753 748
- WO-A-98/13283
- DE-C- 329 475
- GB-A- 1 129 800
- US-A- 4 169 408
- US-A- 4 346 650
- US-A- 4 892 186
- US-A- 4 972 941
- PATENT ABSTRACTS OF JAPAN vol. 017, no. 497 (M-1476), 8 septembre 1993 (1993-09-08) & JP 05 124728 A (MITSUBISHI NAGASAKI KIKO KK), 21 mai 1993 (1993-05-21)
- DATABASE WPI Section PQ, Week 200128 Derwent Publications Ltd., London, GB; Class P27, AN 2001-268995 XP002170688 & JP 2001 054459 A (MIYASAKA KAGU KOGEI KK), 27 février 2001 (2001-02-27)

## Description

L'invention concerne une installation de stérilisation en continu de produits alimentaires contenus dans des emballages souples.

La stérilisation des produits alimentaires contenus dans des emballages souples nécessite de disposer ces emballages dans une enceinte sous pression au cours de la phase de stérilisation et de la phase de refroidissement pour éviter que les emballages n'éclatent sous l'effet de la pression interne générée par l'augmentation de la température au cours du traitement. Ceci est particulièrement vrai lorsque le produit à stériliser est contenu dans un pochon souple. Dans le cas où il s'agit de produits contenus dans des barquettes semi-rigides, US 5 245 916 a proposé un support de barquette qui maintient les bords de la barquette et l'opercule, à l'encontre des forces de pression interne, et ce support de conteneur est manipulé comme s'il s'agissait d'un contenant rigide, bouteille ou canette métallique. Ces supports de barquettes augmentent le coût de l'installation et de la manutention et ne peuvent être utilisés pour protéger des pochons souples.

La stérilisation en continu de produits alimentaires se fait en général dans des stérilisateurs de type à tours, dans lesquels les produits circulent selon des trajets montants et descendants, la pression à l'intérieur des tours allant en augmentant entre les tours extrêmes et la tour médiane dite tour de stérilisation. La variation de pression entre deux tours consécutives est obtenue grâce à une différence de niveau d'eau dans la partie montante d'une tour et la partie descendante de l'autre tour.

Ces stérilisateurs sont adaptés aux produits contenus dans des emballages rigides, mais ils ne sont pas adaptés pour des emballages souples tels que des pochons, car ces emballages subissent des variations de pression importantes lorsqu'ils plongent dans des colonnes d'eau de grande hauteur.

Le brevet belge BE 901 695 décrit un appareil de traitement qui comprend au moins un chariot mobile contenant plusieurs paquets de produits à traiter et se déplaçant suivant un trajet fermé comportant plusieurs postes de traitement successifs : un poste de traitement thermique comportant une chambre de mise sous pression, une chambre de stérilisation et une chambre de décompression, un poste pour refroidir le chariot et les produits, un poste de déchargement du chariot et un poste de chargement du chariot.

Le chariot issu de la chambre de stérilisation est délivré dans la chambre de décompression qui se présente sous la forme d'un sas recevant de l'eau chaude et sous pression de la chambre de stérilisation. Le chariot reste peu de temps dans cette chambre de décompression. L'eau chaude est évacuée et remplacée par de l'eau froide, ensuite la chambre de décompression est mise à la pression atmosphérique, et le chariot avec ses produits encore chauds est évacué vers le poste de refroidissement.

L'appareil décrit dans BE 901 695 permettrait donc de traiter des pochons, pendant la phase de montée en température, à condition que la pression régnant dans la chambre de stérilisation soit suffisante pour contrebalancer les pressions régnant dans les pochons par suite de l'augmentation des températures, mais du fait que, à la sortie de la chambre de décompression, les produits sont encore chauds et sont soumis à la pression atmosphérique, cet appareil est inadapté pour traiter des pochons, car plusieurs de ceux-ci pourraient éclater ou se détériorer à la sortie de la chambre de décompression.

Dans BE 901 695, les chariots sont déplacés à travers les sas et la chambre de stérilisation au moyen d'une vis-sans-fin qui coopère avec un ergot formé sur une paroi latérale du chariot. Outre l'usure inévitable dans une atmosphère chaude, cette disposition nécessite des paliers étanches pour supporter la vis-sans-fin dans les parois d'extrémité de l'installation.

US 4,169,408 et US 4,646,629 dévoilent des installations de stérilisation en continu de produits contenus dans des emballages disposés dans des chariots, dans lesquelles les chariots sont entraînés pas à pas dans la chambre de stérilisation au moyen d'une longue tige de piston qui comporte une pluralité de doigts pousseurs. Ces installations nécessitent également des moyens d'étanchéité des paliers prévus dans les parois d'extrémité de la chambre de stérilisation et à travers lesquels coulissent des tiges de piston. En outre, les doigts pousseurs sont difficilement accessibles lors des opérations de maintenance. US-A-4 346 650 concerne une installation de stérilisation en continu de produits alimentaires. GB-A-1 129 800 divulgue un convoyeur magnétique utilisant une chaîne sans fin. EP-A-0 753 748 se rapporte à une système de transport d'échantillons placés dans des tubes dans une machine d'analyse, au moyen d'un convoyeur magnétique. US-A-4 892 186 concerne à un convoyeur avec une courroie sans fin. US-A-4 972 941 porte sur un appareil permettant la levée et la cuisson de produits de boulangerie-pâtisserie, utilisant un convoyeur à rouleaux. EP-A-0 347 623 se rapport au domaine de la stérilisation de produits alimentaires emballés.

Le but de l'invention est de proposer une installation de stérilisation en continu dans laquelle les problèmes d'étanchéité de l'art antérieur sont éliminés.

L'invention concerne donc une installation de stérilisation de produits contenus dans des emballages, notamment des emballages souples, qui comporte :
une pluralité de chariots mobiles susceptibles de se déplacer les uns à la suite des autres suivant un trajet fermé comprenant un poste de chargement dans lequel un lot d'emballages à traiter est chargé sur un chariot par des moyens de chargement et un poste de déchargement dans lequel un lot d'emballages traités est déchargé d'un chariot par des moyens de déchargement, lesdits chariots passant successivement entre le poste de chargement et le poste de déchargement par :
   - un sas d'entrée susceptible de recevoir, du poste de chargement, selon un cadencement prédéterminé, un chariot chargé d'un lot d'emballage à traiter,
   - un tunnel de stérilisation contenant une eau surchauffée à une pression P1 supérieure à la pression susceptible de régner dans les emballages au cours de la stérilisation,
   - un sas de transfert, dans lequel règne la pression P1 susceptible de recevoir, selon ledit cadencement, un chariot sortant du tunnel de stérilisation,
   - un tunnel de refroidissement contenant une eau de refroidissement à la pression P1, et
   - un sas de sortie susceptible de recevoir selon ledit cadencement un chariot sortant du tunnel de refroidissement avant de le délivrer vers le poste de déchargement,
   - des moyens pour maintenir l'eau dans le tunnel de stérilisation à la température requise et à la pression P1,
   - des moyens pour maintenir l'eau dans le tunnel de refroidissement à la pression P1,
   - des moyens pour faire avancer les chariots entre le poste de chargement et le poste de déchargement,
   - des moyens pour transférer un chariot vide, du poste de déchargement vers le poste de chargement, et
   - des moyens pour cadencer l'ouverture et la fermeture des portes de chaque sas en synchronisme avec les moyens pour faire avancer les chariots.

Cette installation est caractérisée par le fait que le tunnel de stérilisation, le tunnel de refroidissement et les sas sont réalisés en un matériau amagnétique, et les moyens pour faire avancer les chariots dans le tunnel de stérilisation et le tunnel de refroidissement comportent des coupleurs linéaires magnétiques.

Avantageusement, les coupleurs linéaires magnétiques comportent des circuits magnétiques récepteurs montés sur les chariots et des circuits magnétiques émetteurs mobiles prévus à l'extérieur des tunnels.

De préférence, les circuits magnétiques émetteurs sont portés par des courroies sans fin montées sous les tunnels ou des tronçons de tunnels.

Ainsi, les tunnels et les sas sont exempts de dispositifs mécaniques pour le déplacement des chariots. L'entretien de l'installation est ainsi nettement simplifié.

En outre pendant tout le traitement des produits, c'est-à-dire pendant la stérilisation et le refroidissement, les emballages sont soumis à la même pression P1 supérieure à la pression susceptible de régner dans les emballages au cours de la stérilisation. Ce n'est qu'à la sortie du sas de sortie, lorsque les produits sont froids, que les emballages sont soumis à la pression atmosphérique.

Il n'y a donc pas de risque d'éclatement des emballages par suite d'une surpression interne.

Pour diminuer l'emprise au sol de l'installation, le trajet à travers le tunnel de stérilisation et le tunnel de refroidissement comporte de préférence un nombre pair de tronçons de trajet superposés, des moyens étant prévus pour transférer verticalement un chariot d'un tronçon de trajet inférieur, vers un tronçon de trajet immédiatement supérieur. Le poste de déchargement est situé au-dessus du poste de chargement. Les moyens pour transférer un chariot d'un tronçon inférieur à un tronçon supérieur comportent un dispositif ascenseur pour remonter un chariot et un vérin de poussée pour transférer le chariot du dispositif ascenseur vers le début du tronçon de trajet supérieur.

Les avantageuses dispositions suivantes sont en outre de préférence adoptées :
l'eau surchauffée, fournie par un dispositif de chauffage d'eau, circule dans le tunnel de stérilisation dans la direction opposée à la direction d'avancement des chariots et y est maintenue à la pression P1 grâce à la présence d'un premier accumulateur hydropneumatique relié à une source d'air comprimé et monté sur le tunnel de stérilisation.

L'eau de refroidissement circule dans le tunnel de refroidissement dans une direction opposée à la direction d'avancement des chariots et y est maintenue à la pression P1 grâce à la présence d'un deuxième accumulateur hydropneumatique relié à une source d'air comprimé et monté sur le tunnel de refroidissement.

D'autres avantages et caractéristiques de l'invention ressortiront à la lecture de la description suivante faite à titre d'exemple non limitatif et en référence aux dessins annexés, dans lesquels :
la figure 1 est une coupe schématique selon un plan vertical d'une installation de stérilisation selon la présente invention ;
la figure 2 est une vue, selon la flèche Il de la figure 1, de l'installation de stérilisation ;
la figure 3 est une coupe transversale d'un chariot disposé dans le tunnel de stérilisation ;
la figure 4 est une vue latérale en élévation d'une extrémité de l'installation qui montre les postes de chargement et de déchargement des chariots,
la figure 5 est une coupe schématique du dispositif pour transférer un chariot d'un tronçon de trajet inférieur vers un tronçon de trajet supérieur ;
la figure 6 montre en détail le dispositif de transfert de la figure 5 ;
la figure 7 montre la boucle d'eau surchauffée du tunnel de stérilisation ; et
la figure 8 montre la boucle d'eau de refroidissement du tunnel de refroidissement.

Les dessins montrent une installation 1 de stérilisation en continu de produits alimentaires renfermés dans des emballages 2 souples, des pochons par exemple. Les emballages 2 sont chargés dans un poste de chargement 3 dans un chariot 4 équipé de roues 5 par des moyens de chargement connus en soi.

Une fois chargé, le chariot 4 est introduit dans un sas d'entrée 10 situé immédiatement en amont d'un tunnel de stérilisation 11 contenant une eau surchauffée à la température requise et à une pression P1 qui dépend directement de la température de traitement et qui est par exemple de 3,5 bars pour une température de traitement de 126°C. Ensuite, le chariot 4 circule dans le tunnel de stérilisation 11, séparé d'un tunnel de refroidissement 13, contenant une eau de refroidissement à la pression P1, par un sas de transfert 12. La vitesse moyenne du déplacement du chariot 4 dans le tunnel de stérilisation et la longueur de ce tunnel 11 sont calculées de telle manière que les produits contenus dans les chariots 4 soient soumis à une stérilisation efficace. La vitesse moyenne est ajustable selon la durée du traitement thermique et la cadence. Elle est, par exemple, de 1 m/min, et la longueur du tunnel de stérilisation est, par exemple, de 25 m. Le tunnel de stérilisation contient plusieurs chariots 4 disposés les uns à la suite des autres.

Lorsque le chariot 4 a atteint l'extrémité aval du tunnel de stérilisation 11, il entre dans le sas de transfert 12, puis dans le tunnel de refroidissement 13, qui a une longueur suffisante pour permettre un refroidissement total des emballages 2 contenus dans le chariot 4 lorsque ce dernier atteint l'extrémité aval du tunnel de refroidissement 13. Un sas de sortie 14 est prévu à l'extrémité aval du tunnel de refroidissement 13. A la sortie de ce sas 14, le chariot 4 est transféré vers le poste de déchargement 15, puis le chariot vide 4 est de nouveau transféré vers le poste de chargement 3.

Au cours de ce cycle qui peut durer 65 min, le chariot 4 se déplace suivant un trajet fermé, sensiblement horizontal.

Pour diminuer l'emprise au sol de l'installation 1, le trajet du chariot 4 à travers les sas 10, 12 et 14, et les tunnels 11 et 13, est décomposé en un nombre pair de tronçons de trajet parallèles et superposés, et le poste de déchargement 15 est situé au-dessus du poste de chargement 3.

Des dispositifs de transfert vertical 20, d'un chariot 4, sont prévus à l'extrémité aval de chaque tronçon de trajet inférieur, pour transférer un chariot 4 vers l'extrémité amont du tronçon de trajet immédiatement supérieur, l'amont et l'aval étant définis par rapport à la direction de déplacement des chariots 4.

Le chariot 4, de forme globalement parallélépipédique, comporte une cuve 30 équipée de roues 5 et réalisée de préférence au moyen de tôles perforées en acier inoxydable, et éventuellement un couvercle 31. La cuve 30 comporte en outre des cloisons longitudinales 32 et, si besoin, des cloisons transversales pour séparer les colonnes de produits, afin de séparer l'intérieur de la cuve 30 en compartiments dans lesquels sont empilés les emballages souples 2. La longueur d'un chariot 4 est par exemple de 90 cm, sa hauteur et sa largeur étant adaptées selon les dimensions des tunnels 11 et 13.

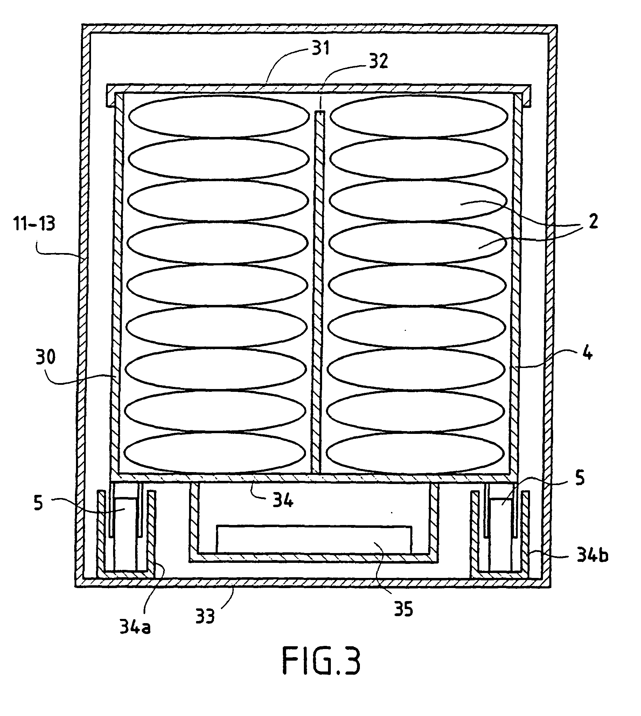

Les tronçons de tunnel, ainsi que cela est montré sur la figure 3, ont une section sensiblement rectangulaire, la largeur étant par exemple de 22 cm et la hauteur de 30 cm. Dans ce cas, la largeur d'un chariot est limitée à 20 cm et sa hauteur est de 25 cm environ.

Les tronçons de tunnel sont réalisés de préférence en acier inoxydable amagnétique, à partir de tôles ayant une épaisseur suffisante pour résister à une pression de 4 bars.

La paroi inférieure 33 de chaque tronçon de tunnel est équipée de deux rails de guidage 34a, 34b de section en U formant des pistes de roulement pour les roues 5 des chariots 4.

Sous le fond 34 de la cuve 30 de chaque chariot 4 est fixé au moins un circuit magnétique récepteur 35 dont la fonction est expliquée ci-après.

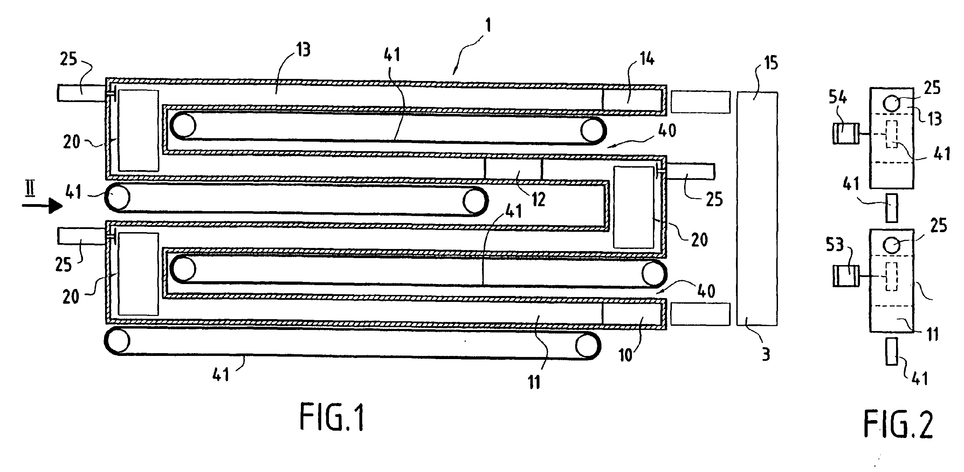

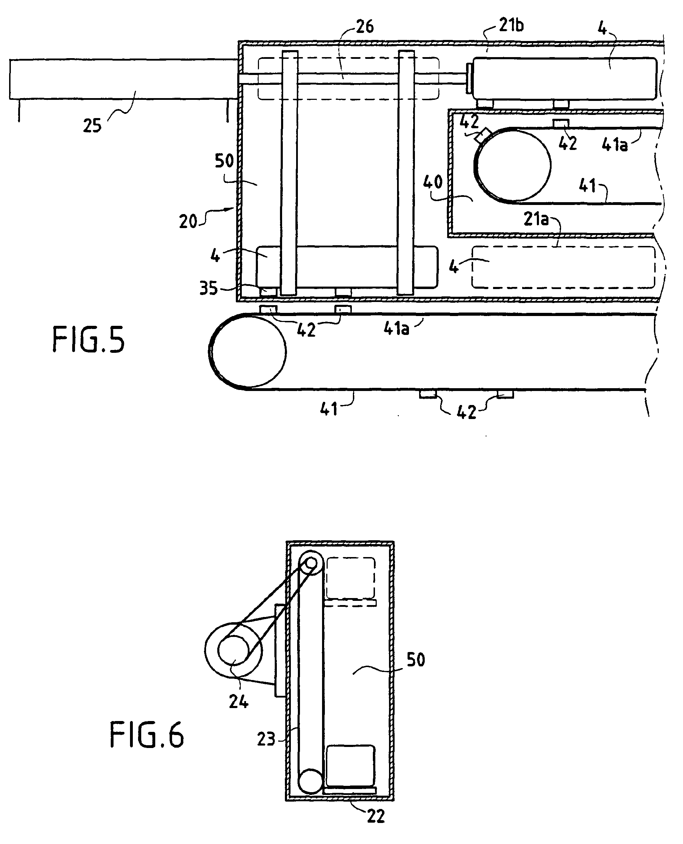

Deux tronçons de tunnel adjacents sont séparés par un espacement vertical 40, visible sur la figure 1, dans lequel loge une courroie sans fin 41 équipée de circuits magnétiques émetteurs 42 (visibles sur la figure 5) destinés à coopérer avec les circuits magnétiques récepteurs 35 des chariots 4 contenus dans le tronçon de tunnel situé immédiatement au-dessus de la courroie 41. Une courroie ou une chaîne sans fin 41 est également positionnée sous le tronçon inférieur.

Les courroies 41 sont entraînées en rotation par des moteurs non représentés sur les dessins de telle manière que le brin supérieur 41 a de chaque courroie 41 se déplace dans le sens de déplacement normal des chariots 4 à une vitesse moyenne voisine de 1 m/min, ce qui entraîne le déplacement des chariots 4 dans le tronçon de tunnel correspondant.

Les courroies 41 constituent ainsi les moyens d'entraînement des chariots 4 dans les tunnels 11 et 13. Comme elles sont disposées à l'extérieur des tunnels 11 et 13, leur maintenance est fortement facilitée. Les courroies 41 peuvent être entraînées en continu ou pas à pas, mais en synchronisme avec les dispositifs 20 de transfert vertical des chariots 4, et avec les dispositifs d'ouverture et de fermeture des portes des sas 10, 12 et 14.

Les figures 5 et 6 montrent en détail un dispositif 20 de transfert vertical d'un chariot 4 entre un tronçon de tunnel inférieur, référencé 21 a et un tronçon de tunnel immédiatement supérieur référencé 21 b. Ce dispositif 20 est disposé dans une chambre 50 communiquant en permanence avec le tronçon inférieur 21 a et le tronçon supérieur 21 b, et dont la section horizontale est adaptée en fonction des dimensions d'un chariot 4. Il comporte essentiellement un plateau 22 fixé sur une chaîne sans fin 23 animé d'un mouvement alternatif de montée et descente par un moteur 24 situé à l'extérieur de la chambre 20. Lorsque le plateau 22 est dans la position inférieure, un chariot 4 se déplace du tronçon inférieur 21 a vers la chambre 50, par suite de la rotation de la courroie inférieure 41, et se positionne au-dessus du plateau 22. Le plateau 22 avec sa charge est déplacé vers le haut dans la chambre 50 grâce au moteur 24 jusqu'à ce que le chariot 4 soit en regard du tronçon supérieur 21b. Dans cette position, un vérin 25 est actionné afin de transférer le chariot 4 dans le tronçon supérieur 21 b.

Le chariot 4 est alors déplacé par la courroie supérieure 41, la tige 26 du vérin 25 est rétractée et le plateau 22 revient à sa position inférieure et est prêt à recevoir le chariot 4 suivant.

Les sas 10, 12 et 14 ont une section semblable à celle des tunnels 11 et 13, et une longueur suffisante pour loger un chariot 4 au cours de son transfert. Ils comportent à l'entrée et à la sortie des portes du type à guillotine actionnées selon un cadencement prédéterminé, en synchronisme avec le déplacement des courroies 41, et avec les dispositifs 20 de transfert vertical des chariots 4, par des moyens, tels que des vérins, connus en soi.

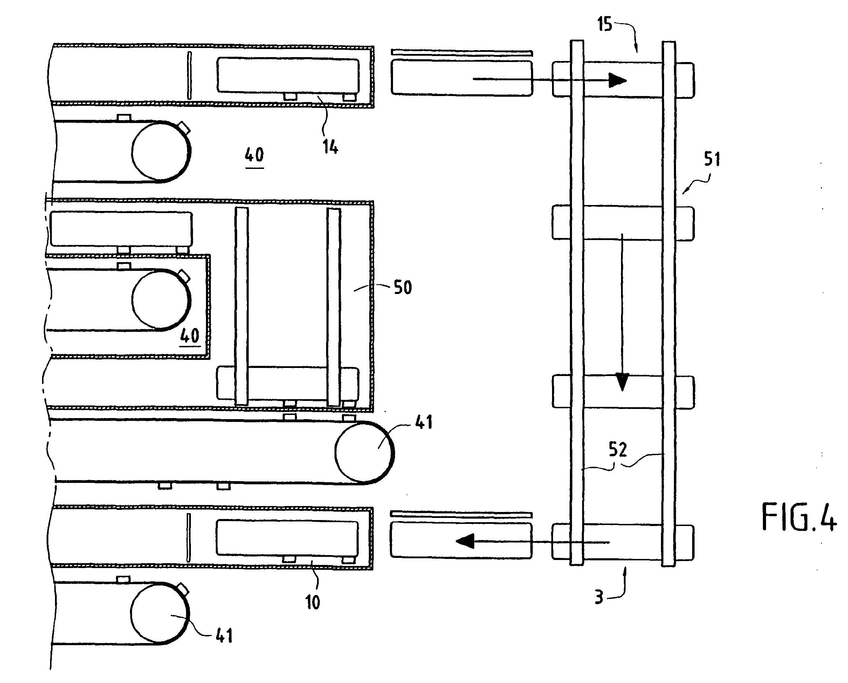

La figure 4 montre le dispositif 51 pour transférer les chariots 4 vides entre le poste de déchargement 15 et le poste de chargement 3. Ce dispositif 51 comporte une chaîne sans fin 52 équipée de plateaux horizontaux qui se déplacent verticalement pas à pas entre le poste de déchargement 15 et le poste de chargement 3. Un convoyeur d'alimentation 53 chargé de délivrer des emballages souples 2 à traiter est disposé sur le côté du poste de chargement 3.

Un convoyeur d'évacuation 54 des emballages souples 2 traités est disposé sur le côté du poste de déchargement 15. Lorsque les chariots 4 comportent des couvercles 31, un dispositif de transfert de couvercle est disposé près des postes 3 et 15 et des sas 10 et 14.

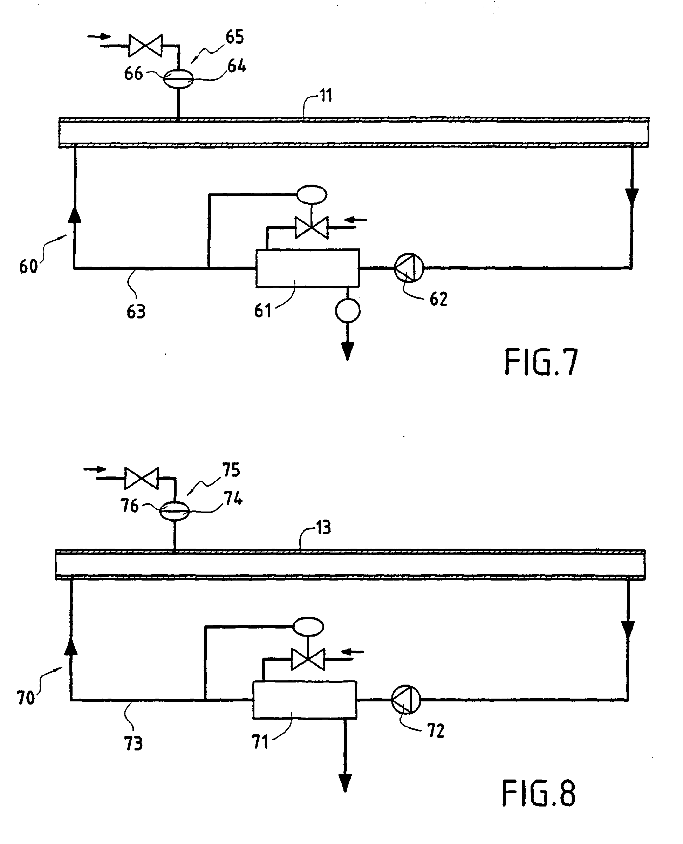

La figure 7 montre la boucle 60 d'eau surchauffée. Cette boucle 60 comporte des moyens de chauffage 61 de l'eau puisée à l'extrémité amont du tunnel de stérilisation 11 au moyen d'une pompe 62 et délivrée à l'extrémité aval du tunnel de stérilisation 11 par un conduit 63.

Les pertes éventuelles d'eau qui peuvent se produire lors des manoeuvres des portes du sas d'entrée 10 et du sas de transfert 12 sont compensées par une prise d'eau froide dans l'installation générale d'eau du site. Afin de maintenir la pression de l'eau dans le tunnel de stérilisation à une valeur constante P1 supérieure à la pression susceptible de régner dans un emballage souple 2 au cours de la stérilisation, l'intérieur du tunnel de stérilisation est relié à la chambre inférieure 64 d'un accumulateur hydropneumatique 65 dont la chambre supérieure 66 est reliée à une source d'air à la pression P1, les deux chambres 64 et 66 étant éventuellement séparées par une membrane élastique. Dans le tunnel de stérilisation 11, l'eau surchauffée circule dans la direction inverse de la direction du déplacement des chariots 4.

La figure 8 montre la boucle 70 d'eau froide. L'eau de refroidissement est mise en circulation dans la boucle 70 par une pompe 72 qui puise l'eau à l'extrémité amont du tunnel de refroidissement 13 et la délivre à l'extrémité aval du tunnel 13 par un conduit 73 après avoir transité par un échangeur de chaleur 71. Comme pour la boucle d'eau surchauffée 60, les pertes éventuelles d'eau froide dans le sas de transfert 12 et le sas de sortie 14 sont compensées par une prise d'eau froide dans l'installation générale d'eau du site.

L'intérieur du tunnel de refroidissement 13 est en communication permanente avec la chambre inférieure 74 d'un accumulateur hydropneumatique dont la chambre supérieure 76 est raccordée à une source d'air comprimé à la pression P1. L'eau de refroidissement circule dans le tunnel de refroidissement 13 à contre-courant du déplacement des chariots 4.

Dans le mode de réalisation décrit ci-dessus, il est prévu des chariots équipés de roues. Ces chariots peuvent être remplacés par des paniers sans roues, les tunnels 11 et 13 étant alors équipés de rails de roulement.

## Revendications

1. Installation de stérilisation en continu de produits contenus dans des emballages (2), notamment des emballages souples, comportant :
une pluralité de chariots (4) mobiles susceptibles de se déplacer les uns à la suite des autres suivant un trajet fermé comprenant un poste de chargement (3) dans lequel un lot d'emballages (2) à traiter est chargé sur un chariot (4) par des moyens de chargement et un poste de déchargement (15) dans lequel un lot d'emballages (2) traités est déchargé d'un chariot par des moyens de déchargement, lesdits chariots (4) passant successivement entre le poste de chargement (3) et le poste de déchargement (15) par :
- un sas d'entrée (10) susceptible de recevoir du poste de chargement (3), selon un cadencement prédéterminé un chariot (4) chargé d'un lot d'emballage à traiter,
- un tunnel de stérilisation (11) contenant une eau surchauffée à une pression P1 supérieure à la pression susceptible de régner dans les emballages (2) au cours de la stérilisation,
- un sas de transfert (12) dans lequel règne la pression P1 susceptible de recevoir, selon ledit cadencement, un chariot (4) sortant du tunnel de stérilisation (11),
- un tunnel de refroidissement (13) contenant une eau de refroidissement à la pression P1, et
- un sas de sortie (14) susceptible de recevoir selon ledit cadencement un chariot (4) sortant du tunnel de refroidissement avant sa délivrance vers le poste de déchargement (15),
- des moyens pour maintenir l'eau dans le tunnel de stérilisation (11) à la température requise et à la pression P1,
- des moyens pour maintenir l'eau dans le tunnel de refroidissement (13) à la pression P1,
- des moyens pour faire avancer les chariots entre le poste de chargement (3) et le poste de déchargement (15),
- des moyens pour transférer un chariot (4) vide, du poste de déchargement (15) vers le poste de chargement (3), et
- des moyens pour cadencer l'ouverture et la fermeture des portes de chaque sas (10, 12, 14) en synchronisme avec les moyens pour faire avancer les chariots (4), **caractérisée par le fait que** le tunnel de stérilisation (11), le tunnel de refroidissement (13) et les sas (10, 12, 14) sont réalisés en un matériau amagnétique, et les moyens pour faire avancer les chariots (4) dans le tunnel de stérilisation (11) et le tunnel de refroidissement (13) comportent des coupleurs linéaires magnétiques (35, 42).

2. Installation selon la revendication 1, **caractérisée par le fait que** les coupleurs linéaires magnétiques comportent des circuits magnétiques récepteurs (35) montés sur les chariots (4) et des circuits magnétiques émetteurs (42) prévus mobiles à l'extérieur des tunnels.

3. Installation selon la revendication 2, **caractérisée par le fait que** les circuits magnétiques émetteurs sont portés par des courroies sans fin montées sous les tunnels ou des tronçons de tunnels (21 a, 21 b).

4. Installation selon l'une quelconque des revendications 1 à 3, **caractérisée par le fait que** le trajet à travers le tunnel de stérilisation (11) et le tunnel de refroidissement (13) comporte un nombre pair de tronçons (21a, 21b) de trajet superposés, des moyens (20) étant prévus pour transférer verticalement un chariot (4) d'un tronçon de trajet inférieur (21 a), vers un tronçon de trajet (21 b) immédiatement supérieur.

5. Installation selon la revendication 4, **caractérisée par le fait que** le poste de déchargement (15) est situé au-dessus du poste de chargement (3).

6. Installation selon l'une des revendications 4 ou 5, **caractérisée par le fait que** les moyens pour transférer un chariot d'un tronçon inférieur (21a) à un tronçon supérieur (21b) comportent un dispositif ascenseur (22, 23, 24) pour remonter un chariot et un vérin de poussée (25, 26) pour transférer le chariot (4) du dispositif ascenseur vers le début du tronçon de trajet supérieur (21 b).

7. Installation selon l'une quelconque des revendications 1 à 6, **caractérisée par le fait que** l'eau surchauffée circule dans le tunnel de stérilisation (11) dans la direction opposée à la direction d'avancement des chariots (4) et est fournie par un dispositif de chauffage (61, 62) d'eau, et y est maintenue à la pression P1 grâce à la présence d'un premier accumulateur hydropneumatique (65) relié à une source d'air comprimé et monté sur le tunnel de stérilisation (11).

8. Installation selon l'une quelconque des revendications 1 à 7, **caractérisée par le fait que** l'eau de refroidissement circule dans le tunnel de refroidissement (13) dans une direction opposée à la direction d'avancement des chariots (4) et y est maintenue à la pression P1 grâce à la présence d'un deuxième accumulateur hydropneumatique (65) relié à une source d'air comprimé et monté sur le tunnel de refroidissement (13).

## Claims

1. An installation for continuously sterilizing products contained in packages (2), in particular flexible packages, the installation including:
- a plurality of moving carriages (4) suitable for moving one after another along a closed path comprising a loading station (3) in which a batch of packages (2) to be treated is loaded onto a carriage (4) by loading means, and an unloading station (15) in which a batch of treated packages (2) is unloaded from a carriage by unloading means, said carriages (4) passing successively between the loading station (3) and the unloading station (15) via:
- an inlet lock (10) suitable for receiving a carriage (4) loaded with a batch of packages for treatment from the loading station (3) at a predetermined rate;
- a sterilizing tunnel (11) containing superheated water at a pressure P1 greater than the pressure that is likely to exist in the packages (2) being sterilized;
- a transfer lock (12) in which the pressure P1 subsists, said transfer lock being suitable for receiving a carriage (4) from the sterilizing tunnel (11) at said rate;
- a cooling tunnel (13) containing cooling water at a pressure P1; and
- an outlet lock (14) suitable for receiving a carriage (4) coming from the cooling tunnel at said rate, prior to delivering it to the unloading station (15);
- means for maintaining the water in the sterilizing tunnel (11) at the required temperature and at the pressure P1;
- means for maintaining the water in the cooling tunnel (13) at the pressure P1;
- means for causing the carriages to advance from the loading station (3) to the unloading station (15);
- means for transferring an empty carriage (4) from the unloading station (15) to the loading station (3); and
- means for causing the doors of the locks (10, 12, 14) to open and close synchronously with the means for causing the carriages (4) to advance; the installation being **characterized by** the fact that the sterilizing tunnel (11), the cooling tunnel (13), and the locks (10, 12, 14) are made of a nonmagnetic material, and the means for causing the carriages (4) to advance inside the sterilizing tunnel (11) and the cooling tunnel (13) comprise linear magnetic couplers (35, 42).

2. An installation according to claim 1, **characterized by** the fact that the linear magnetic couplers comprise magnetic receiver circuits (35) mounted on the carriages (4) and magnetic transmitter circuits (42) mounted to move outside the tunnels.

3. An installation according to claim 2, **characterized by** the fact that the transmitter magnetic circuits are carried by endless belts mounted beneath the tunnels or tunnel segments (21a, 21b).

4. An installation according to any one of claims 1 to 3, **characterized by** the fact that the path through the sterilizing tunnel (11) and the cooling tunnel (13) comprises an even number of superposed path segments (21a, 21b), means (20) being provided for transferring a carriage (4) vertically from a lower path segment (21a) towards the next higher path segment (21b).

5. An installation according to claim 4, **characterized by** the fact that the unloading station (15) is situated above the loading station (3).

6. An installation according to claim 4 or claim 5, **characterized by** the fact that the means for transferring a carriage from a lower segment (21a) to a higher segment (21b) comprise an elevator device (22, 23, 24) for raising a carriage, and a thrust actuator (25, 26) for transferring the carriage (4) from the elevator device to the beginning of the higher path segment (21b).

7. An installation according to any one of claims 1 to 6, **characterized by** the fact that the superheated water circulates in the sterilizing tunnel (11) in the opposite direction to the direction in which the carriages (4) advance and is supplied by a water heater device (61, 62), and is maintained therein at the pressure P1 by the presence of a first hydropneumatic accumulator (65) connected to a source of compressed air and mounted on the sterilizing tunnel (11).

8. An installation according to any one of claims 1 to 7, **characterized by** the fact that the cooling water circulates in the cooling tunnel (13) in a direction opposite to the travel direction of the carriages (4) and is maintained at the pressure P1 therein by the presence of a second hydropneumatic accumulator (65) connected to a source of compressed air and mounted on the cooling tunnel (13).

## Patentansprüche

1. Anlage zum kontinuierlichen Sterilisieren von in Verpackungen (2), insbesondere flexiblen Verpackungen enthaltenen Produkten, umfassend:
eine Vielzahl von beweglichen Wagen (4), die geeignet sind, sich hintereinander entlang einer geschlossenen Strecke fortzubewegen, welche eine Beladestelle (3) umfaßt, an der ein Satz von zu behandelnden Verpackungen (2) durch Belademittel auf einen Wagen (4) geladen wird, sowie eine Entladestelle (15), an der ein Satz von behandelten Verpackungen (2) durch Entlademittel von einem Wagen abgeladen wird, wobei die Wagen (4) zwischen der Beladestelle (3) und der Entladestelle (15) nacheinander folgendes durchlaufen:
- eine Eingangskammer (10), die geeignet ist, von der Beladestelle (3) in einem vorbestimmten Takt einen mit einem Satz von zu behandelnden Verpackungen beladenen Wagen (4) aufzunehmen,
- einen Sterilisationstunnel (11), der Heißwasser unter einem Druck P1 enthält, welcher höher ist als der Druck, der während der Sterilisation in den Verpackungen (2) herrschen kann,
- eine Transferkammer (12), in welcher der Druck P1 herrscht und die geeignet ist, in dem genannten Takt einen den Sterilisationstunnel (11) verlassenden Wagen (4) aufzunehmen,
- einen Kühltunnel (13), der Kühlwasser unter dem Druck P1 enthält, und
- eine Ausgangskammer (14), die geeignet ist, in dem genannten Takt einen den Kühltunnel verlassenden Wagen (4) vor dessen Weitergabe in Richtung der Entladestelle (15) aufzunehmen,
- Mittel, um das Wasser in dem Sterilisationstunnel (11) auf der erforderlichen Temperatur und dem Druck P1 zu halten,
- Mittel, um das Wasser in dem Kühltunnel (13) auf dem Druck P1 zu halten,
- Mittel zum Vorwärtsbewegen der Wagen zwischen der Beladestelle (3) und der Entladestelle (15),
- Mittel zum Überführen eines leeren Wagens (4) von der Entladestelle (15) zur Beladestelle (3), und
- Mittel zum Takten des Öffnens und des Schließens der Türen jeder Kammer (10, 12, 14) in Abstimmung mit den Mitteln zum Vorwärtsbewegen der Wagen (4),
**dadurch gekennzeichnet, daß** der Sterilisationstunnel (11), der Kühltunnel (13) und die Kammern (10, 12, 14) aus einem unmagnetischen Material bestehen und die Mittel zum Vorwärtsbewegen der Wagen (4) in dem Sterilisationstunnel (11) und dem Kühltunnel (13) lineare Magnetkupplungen (35, 42) umfassen.

2. Anlage nach Anspruch 1, **dadurch gekennzeichnet, daß** die linearen Magnetkupplungen magnetische Empfangskreise (35), die an den Wagen (4) angebracht sind, sowie außerhalb der Tunnel beweglich vorgesehene magnetische Sendekreise (42) umfassen.

3. Anlage nach Anspruch 2, **dadurch gekennzeichnet, daß** die magnetischen Sendekreise von Endlosriemen getragen sind, welche unter den Tunneln oder unter Tunnelabschnitten (21 a, 21 b) angebracht sind.

4. Anlage nach einem der Ansprüche 1 bis 3, **dadurch gekennzeichnet, daß** die Strecke durch den Sterilisationstunnel (11) und den Kühltunnel (13) eine gerade Anzahl von übereinander liegenden Streckenabschnitten (21 a, 21 b) umfaßt, wobei Mittel (20) vorgesehen sind, um einen Wagen (4) von einem unteren Streckenabschnitt (21 a) zu einem nächsthöheren Streckenabschnitt (21 b) vertikal zu befördern.

5. Anlage nach Anspruch 4, **dadurch gekennzeichnet, daß** die Entladestelle (15) oberhalb der Beladestelle (3) gelegen ist.

6. Anlage nach einem der Ansprüche 4 oder 5, **dadurch gekennzeichnet, daß** die Mittel zum Überführen eines Wagens von einem unteren Abschnitt (21 a) zu einem höher gelegenen Abschnitt (21 b) eine Aufzugvorrichtung (22, 23, 24) zum Hinaufbewegen eines Wagens sowie einen Schubzylinder (25, 26) umfassen, um den Wagen (4) von der Aufzugvorrichtung zum Anfang des höher gelegenen Streckenabschnitts (21 b) zu überführen.

7. Anlage nach einem der Ansprüche 1 bis 6, **dadurch gekennzeichnet, daß** das Heißwasser in dem Sterilisationstunnel (11) in der zur Vorwärtsbewegungsrichtung der Wagen (4) entgegengesetzten Richtung strömt und über eine Wassererwärmungsvorrichtung (61, 62) geliefert wird und dank des Vorliegens eines ersten Hydro-Blasenspeichers (65), welcher mit einer Druckluftquelle verbunden und an dem Sterilisationstunnel (11) angebracht ist, dort auf dem Druck P1 gehalten wird.

8. Anlage nach einem der Ansprüche 1 bis 7, **dadurch gekennzeichnet, daß** das Kühlwasser in dem Kühltunnel (13) in einer zur Vorwärtsbewegungsrichtung der Wagen (4) entgegengesetzten Richtung strömt und dank des Vorliegens eines zweiten Hydro-Blasenspeichers (65), welcher mit einer Druckluftquelle verbunden und an dem Kühltunnel (13) angebracht ist, dort auf dem Druck P1 gehalten wird.
